# FASCICULE DE BREVET EUROPEEN

(11) **EP 1 844 230 B1**
(45) Date de publication et mention de la délivrance du brevet: **16.11.2016**
(21) Numéro de dépôt: 06709106.6
(22) Date de dépôt: 17.01.2006
(51) Int. Cl.: F02N 11/04, F02N 11/08, H02P 9/02, H02P 9/30

(54) **GESTION DU FONCTIONNEMENT D'UN ALTERNO-DEMARREUR DE VEHICULE AUTOMOBILE**
BETRIEBSSTEUERUNG EINES ALTERNO-ANLASSERS FÜR EIN KRAFTFAHRZEUG
METHOD FOR OPERATING A MOTOR VEHICLE STARTER-GENERATOR

(30) Priorité: 26.01.2005 FR 0500812
(43) Date de publication de la demande: 17.10.2007
(73) Titulaire: VALEO EQUIPEMENTS ELECTRIQUES MOTEUR, 94017 Créteil Cedex (FR)
(72) Inventeur: LOUISE, christophe, F-94160 Alfortville (FR)
(74) Mandataire: de Lambilly Delorme, Marie Pierre
(86) Numéro de dépôt international: PCT/FR2006/000099
(87) Numéro de publication internationale: WO 2006/079700

(56) Documents cités:
- EP-A- 1 429 021
- EP-A- 1 489 295
- DE-A1- 10 254 069

## Description

### Domaine de l'invention

La présente invention concerne un procédé pour faire fonctionner une machine électrique tournante polyphasée réversible pour un véhicule automobile.

L'invention concerne de manière générale le choix de l'architecture électronique et la gestion du fonctionnement des machines électriques tournantes polyphasées réversibles, telles que les alterno-démarreurs.

L'invention trouve des applications, en particulier, dans le domaine des véhicules automobiles. Elle s'applique plus généralement à la commande de tout alterno-démarreur, ou moteur-alternateur ou encore moteur-alternateur-démarreur, à entraînement direct ou par courroie.

### Etat de la technique

Dans un alternateur classique (c'est-à-dire non réversible), il existe un régulateur dont le rôle est de réguler la tension du réseau de bord quel que soit le courant débité par la machine. Le régulateur peut être de type piloté. Il est alors interfacé avec un boîtier de commande, notamment un boîtier de contrôle moteur, par l'intermédiaire d'une liaison bas débit, par exemple une liaison LIN (*Local Interconnect Network -* "LIN Specification Package", Révision 2.0, 23 septembre 2003), lui transmet des consignes de régulation. Ce type de système « régulateur-boîtier de commande » ne nécessite pas de commande particulière de la machine, en dehors du contrôle de la régulation.

Dans un système comprenant une machine réversible, l'électronique de puissance et de contrôle est intégrée dans ladite machine, tel que décrit dans le document WO 04/006423. Cet alterno-démarreur est dit intégré en ce qu'il comprend un module de contrôle et de puissance pouvant être intégré dans ou sur le boîtier contenant l'ensemble électromécanique de la machine. Ce module comprend, d'une part, une unité de puissance ayant un pont de transistors MOS de puissance comme éléments redresseurs de tension (en mode alternateur) et comme éléments de commutation des enroulements de phase de ladite machine (en mode démarreur ou moteur) ainsi qu'une unité hacheur alimentant l'enroulement d'excitation du rotor de la machine, et, d'autre part, une unité de contrôle ayant des circuits pilotes ("Driver Circuits", en anglais) pour piloter les transistors ainsi qu'un circuit de gestion des drivers. Ce module de contrôle et de puissance assure la gestion de la régulation de la tension redressée (en mode alternateur), et également la gestion du démarrage (en mode moteur ou démarreur). En d'autres termes, le contrôle de l'alterno-démarreur depuis l'extérieur se limite essentiellement à lui indiquer s'il doit fonctionner en mode démarreur ou en mode alternateur.

Toutefois, on assiste actuellement à une évolution de la fonction démarrage, avec l'apparition des algorithmes "Stop and Start" (arrêt du moteur thermique pendant les phases d'arrêt du véhicule, et redémarrage dès la première sollicitation du conducteur ou sur un autre critère) visant à générer des économies de carburant. Cette apparition d'un alterno-démarreur évolué s'accompagne de la prise en compte d'un nombre relativement élevé d'informations générées par des capteurs, d'une part, et de l'utilisation d'un logiciel relativement complexe (donc nécessitant une capacité mémoire de stockage relativement élevée, et une puissance de traitement relativement importante pour son exécution), d'autre part.

Afin de recevoir de telles informations, il est nécessaire notamment d'implanter un connecteur multibroche (par exemple un connecteur à 36 voies) à l'arrière de l'alterno-démarreur et de prévoir des ressources logicielles et de traitement relativement importantes au niveau de la machine.

Ceci pose des problèmes de fiabilité et de coût, compte tenu de la sévérité de l'environnement thermique et vibratoire.

### Exposé de l'invention

Un objet de la présente invention est de proposer une alternative à l'architecture électronique et à la gestion du fonctionnement d'un alterno-démarreur répondant aux problèmes identifiés ci-dessus.

A cet effet, un premier aspect de l'invention propose la combinaison d'une machine électrique tournante polyphasée réversible pour véhicule automobile, d'une unité de contrôle distante et d'une pluralité de liaisons filaires, ladite machine comprenant un module de puissance intégré dans ou à proximité immédiate de ladite machine et ledit module de puissance étant couplé à ladite unité de contrôle via ladite pluralité de liaisons filaires, caractérisée en ce que ladite unité de contrôle réalise une gestion de haut niveau et une gestion de bas niveau de la machine,ladite gestion de haut niveau comprenant :
- une gestion de capteurs utiles à une fonction démarrage et redémarrage, et/ou
- au moins un algorithme d'arrêt/redémarrage automatiques, et/ou
- une gestion de l'état de charge et/ou un diagnostique d'une batterie, et/ou
- une gestion d'informations issues d'un bus de communication inter systèmes du véhicule en vue de piloter ladite machine, et
ladite gestion de bas niveau comprenant :
- un choix du mode fonctionnel de la machine, et/ou
- au moins une fonction de sûreté de fonctionnement du véhicule, et/ou
- une régulation de la tension du réseau du véhicule ou du courant débitée par la machine, et/ou
- un diagnostique de la machine.

Les informations matérielles sont des commandes du module de puissance situé à proximité immédiate par exemple à l'arrière de ladite machine ou intégré dans le boîtier de la machine.

On entend par gestion haut niveau d'une machine électrique tournante polyphasée réversible, notamment, la gestion complète des capteurs utiles à la gestion de la fonction démarrage (et redémarrage pour la fonction « Stop and Start ») ainsi que des algorithmes d'arrêt/redémarrage automatique, et des algorithmes de gestion de l'état de charge et/ou de santé de la batterie assurant aussi son diagnostique. Cette gestion haut niveau comprend également une gestion d'informations issues d'un bus de communication inter-systèmes du véhicule en vue de piloter ladite machine, par exemple en établissant des ordres simples (commandes bas niveau) nécessaires au fonctionnement de la machine.

On entend, en effet, par gestion bas niveau d'une telle machine, notamment, les ordres indiquant à la machine si elle doit fonctionner en mode démarreur, moteur ou alternateur, les consignes de régulation de la tension réseau du véhicule ou du courant débité par la machine, le diagnostique concernant le fonctionnement de la machine (gestion des défauts thermiques, électriques ou mécaniques) et au moins une fonction de sûreté de fonctionnement du véhicule (interdiction de démarrage par exemple).

Enfin, la gestion des informations matérielles inclut le contrôle des transistors MOS de puissance appliquant les tensions de phases (en mode démarreur ou moteur) ou effectuant le redressement synchrone (en mode alternateur) ainsi que le contrôle du courant d'excitation afin d'assurer la régulation de la tension ou du courant généré par la machine.

Ainsi, l'invention permet d'éviter l'utilisation de câbles sur lesquels des puissances électriques importantes sont véhiculées (à savoir la puissance délivrée par des transistors MOS de l'onduleur qui alimente les bobinages induits de la machine) entre la machine et un module de contrôle et de puissance distant en intégrant l'électronique de puissance à l'arrière de la machine, permettant ainsi de gagner en fiabilité et en sécurité, bien que la machine soit placée dans un environnement thermique et vibratoire très sévère.

Par ailleurs, le fractionnement de la gestion de fonctionnement de la machine en une partie haut niveau et bas niveau (effectuée en dehors de la machine), d'une part, et une partie matérielle (effectuée dans la machine), d'autre part, permet de bénéficier des avantages d'un contrôle déporté : isolation par rapport à l'environnement thermique et vibratoire très sévère, ressources logicielles et matérielles facilement disponibles, grande flexibilité par rapport aux applications et aux architectures de réseau de bord (une seule batterie, deux batteries en parallèle, deux batteries en série notamment au démarrage, réseau alliant batterie et super-capacités...). On aura en effet un seul microprocesseur dans une unité de contrôle déportée, et par suite une unique architecture standard quelque soit la nature du réseau de bord du véhicule (14V, 42V). De plus, le fait d'avoir une unité de contrôle déportée permet de ne pas être limitée en terme de ressources à intégrer dans ladite unité.

De plus, cela offre la possibilité d'intégrer la gestion haut niveau et bas niveau dans une unité centrale de commande déjà existante (un boîtier de servitude intelligent, un boîtier de contrôle moteur, un boîtier de gestion du réseau de bord dans le cas d'un réseau utilisant plusieurs batteries ou des super-capacités...) puisque cette intégration ne nécessite pas de ressources en électronique de puissance (intégration de ressources logicielles et ajout d'entrées / sorties numériques et / ou analogiques). L'avantage se situe donc aussi au niveau du coût du système (machine et électronique déportée).

Enfin, le fait d'utiliser des liaisons filaires permet de transmettre une unique information par liaison quelle soit numérique ou analogique, ladite information ne dépendant d'aucun protocole de communication.

Ainsi, des liaisons filaires de ladite pluralité sont destinées à transmettre :
- des informations relatant la position du rotor de la machine,
- et/ou une information sur la température de la machine,
- une commande permettant de sélectionner un mode de fonctionnement de la machine,
- et/ou au moins une commande relative à une gestion de la sûreté de fonctionnement du système,
- et/ou des ordres de commutations d'interrupteurs d'un pont de puissance de la machine.

Par ailleurs, la gestion de la sûreté de fonctionnement du véhicule comprend une commande d'inhibition du mode moteur et/ou démarreur de la machine.

De plus, la pluralité de liaisons comprend :
- au moins une liaison d'alimentation, et
- et/ou une liaison de masse.

En outre, selon un premier mode de réalisation, l'unité de contrôle comprend un circuit d'excitation de la machine. Dans ce cas, la pluralité de liaisons comprend deux liaisons électriques reliant des extrémités d'un enroulement inducteur de la machine.

Selon un deuxième mode de réalisation, le circuit d'excitation pilotant le courant rotor est compris dans la machine et n'est plus dans l'unité de contrôle. Dans ce cas, des liaisons filaires de ladite pluralité sont destinées à transmettre :
- une commande de pilotage d'un transistor d'excitation,
- et/ou une commande de pilotage d'un transistor de protection,
- et/ou une information sur un courant rotorique de la machine,
- et/ou une information sur une tension rotorique de la machine.

Un deuxième aspect de l'invention concerne une machine électrique tournante polyphasée réversible pour véhicule automobile, comprenant un module de puissance intégré dans ou à proximité immédiate de la machine couplé à une unité de contrôle distante, via une pluralité de liaisons filaires, ladite unité de contrôle étant destinée à réaliser une gestion haut niveau et bas niveau de la machine.

Enfin, un troisième aspect de l'invention concerne une unité de contrôle pour véhicule automobile pour réaliser une gestion haut niveau et bas niveau d'une machine électrique tournante polyphasée réversible distante, adaptée pour être couplée à un module de puissance de ladite machine, via une pluralité de liaison filaires.

L'unité de contrôle peut être un boîtier de contrôle moteur, un boîtier de servitude intelligent (BSI), un boîtier de servitude moteur (BSM), une unité de déconnexion batterie, un boîtier de gestion de l'état de charge et de santé d'une batterie ou encore un boîtier de gestion des commutations entre plusieurs batteries ou super-capacités. En variante, notamment si les équipements précités n'ont pas assez de ressources matérielles et/ou logicielles, ou n'ont pas été prévus à cet effet, l'unité de contrôle peut prendre la forme d'une unité de contrôle dédiée à la commande de l'alterno-démarreur. Cette unité peut s'interfacer avec l'un au moins des équipements précités, via un bus (dédié ou inter systèmes) tel qu'un bus CAN, ou équivalent.

L'unité de contrôle peut être uniquement dédiée à la fonction de la gestion haut niveau et bas niveau de la machine, ou assurer d'autres fonctions simultanément.

La communication entre le module de puissance de la machine et l'unité de contrôle distante doit permettre de transmettre les informations nécessaires au bon fonctionnement de la machine tout en assurant la robustesse et la sûreté de fonctionnement malgré l'environnement thermique et vibratoire sévère dans lequel elle se trouve. Les informations précitées sont relatives, en particulier, au choix du mode de fonctionnement de la machine (en mode alternateur ou en mode démarreur), aux ordres de commutations des transistors de puissance en mode démarrage, à la sûreté de fonctionnement du système (inhibition du mode moteur ou démarreur de la machine)... Le module de puissance peut également envoyer des informations à l'unité de contrôle en particulier la température du pont de puissance ou un diagnostique fonctionnel du pont et de la machine. De plus le module de puissance comprend des capteurs à effet hall permettant de donner la position relative du rotor. Enfin une ou plusieurs lignes d'alimentations peuvent transiter entre l'unité de contrôle et le module de puissance.

### Brève description des Figures

D'autres caractéristiques et avantages de l'invention apparaîtront encore à la lecture de la description qui va suivre. Celle-ci est purement illustrative et doit être lue en regard des dessins annexés, sur lesquels :
- la Fig. 1 est un schéma illustrant le principe de gestion du fonctionnement d'une machine selon la présente invention;
- la Fig. 2 est un schéma illustrant un premier mode de réalisation du principe de fonctionnement selon l'invention avec un circuit d'excitation intégré dans un module de puissance de la machine; et,
- la Fig. 3 est un schéma illustrant un deuxième mode de réalisation du principe de fonctionnement selon l'invention avec un circuit d'excitation intégré dans une unité de contrôle distante.

Sur les dessins, des éléments identiques ou similaires portent les mêmes références à travers toutes les Figures.

### Description détaillée de modes de réalisation de l'invention.

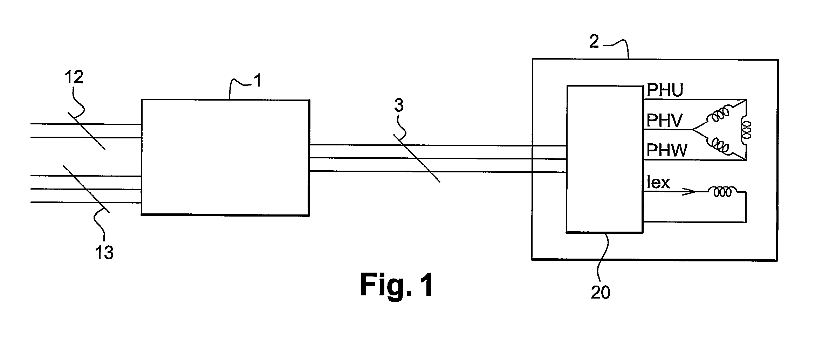

La Fig. 1 illustre le principe de la gestion d'une machine électrique tournante réversible selon la présente invention.

Une unité de contrôle 1 est couplée à une machine électrique tournante réversible 2, telle qu'un alterno-démarreur, et plus particulièrement à un module de puissance 20 de celui-ci.

Ce couplage est réalisé via une pluralité de liaisons filaires 3. L'unité de contrôle 1 et la machine 2 sont dites distantes l'une de l'autre, en ce sens que l'une est déportée par rapport à l'autre, c'est-à-dire qu'elle se situe à une distance non nulle. Les fils de la pluralité de liaisons 3 présentent donc une longueur non nulle, par exemple quelques dizaines de centimètres voire plusieurs mètres. **On rappellera qu'une liaison filaire est un fil permettant de transmettre une information analogique ou numérique.**

La gestion haut niveau et bas niveau du fonctionnement de la machine 2 est réalisée par l'unité de contrôle 1 qui pilote via la pluralité de liaisons 3 ladite machine. La gestion haut niveau comprend, notamment :
- la gestion des capteurs utiles à la fonction démarrage (et re-démarrage),
- un ou plusieurs algorithmes d'arrêt/redémarrage automatique S&S couramment appelés dans la langue anglaise "Stop and Start", et
- la gestion de l'état de charge et/ou le diagnostique de la batterie.

A cet effet, l'unité de contrôle 1 comprend des ressources matérielles (notamment un microprocesseur, de la mémoire, un connecteur multivoies, etc.) et des ressources logicielles relativement complexes.

L'unité de contrôle 1 transforme les informations provenant de capteurs du véhicule reçues par les liaisons filaires 13 (liaisons analogiques ou numériques) et les informations issues d'un bus de communication inter systèmes (bus de communication principal du véhicule connectant notamment le contrôle moteur) 12 en des commandes bas niveau. L'unité de contrôle peut ainsi, par exemple, envoyer un ordre de démarrage (commande bas niveau) à la machine si une demande de démarrage est présente sur le bus inter système et que les informations issues des capteurs indiquant la position de la pédale de frein, la position de la boîte de vitesse et la position de l'embrayage le permettent.

On entend, en effet, par gestion bas niveau d'une telle machine, notamment :
- les ordres indiquant à la machine si elle doit fonctionner en mode démarreur ou en mode alternateur,
- les consignes de régulation en mode alternateur, et
- le diagnostique concernant le fonctionnement de la machine (gestion des défauts thermiques, électriques ou mécaniques).

Enfin, la gestion matérielle de la machine est réalisée au niveau du module 20 et inclue :
- le contrôle des transistors MOS de puissance appliquant les tensions de phases PHU, PHV et PHW dans le cas d'une machine triphasée (en mode démarreur ou moteur) ou effectuant le redressement synchrone (en mode alternateur),
- ainsi que la régulation de la tension ou du courant généré par la machine.

En pratique, le module 20 peut être situé à l'intérieur du boîtier de la machine 2, ou à sa proximité immédiate, par exemple fixé à l'arrière de celui-ci.

Cette électronique de puissance 20 comprend essentiellement des transistors MOS de puissance et des circuits drivers qui pilotent ces transistors. Elle peut, dans un mode de réalisation avantageux mais non limitatif intégrer également des capteurs de position du rotor et / ou un capteur de température du pont de puissance de la machine.

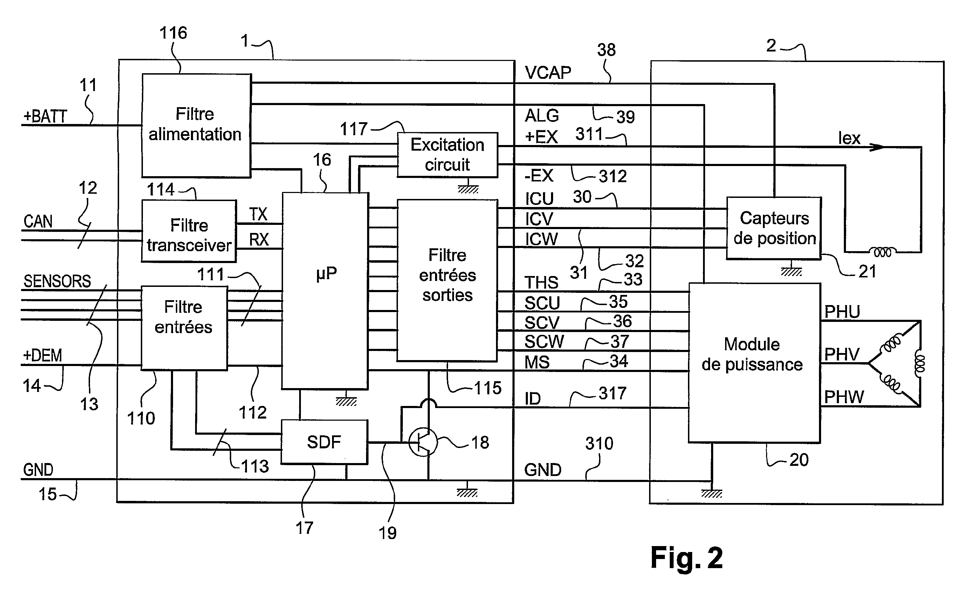

Le schéma de la Fig. 2 illustre un premier mode non limitatif de mise en oeuvre de la présente invention.

Dans ce mode, la liaison de communication inter systèmes 12 est un bus CAN (*Controller Area Network -* Norme ISO 11898).

L'unité de contrôle 1 comprend ici un microprocesseur (µP) 16, par exemple un microprocesseur 16 bits, relié à un ensemble de capteurs SENSORS via une pluralité de lignes filaires 13. Le microprocesseur 16 est aussi relié à l'interrupteur de démarrage (non représenté) du véhicule via un fil 14, pour recevoir un signal +DEM de commande de démarrage.

Le microprocesseur 16 est adapté pour piloter la gestion haut niveau de la machine. Il comprend notamment les algorithmes de gestion batterie BMS (*Battery Management System*) et d'arrêt/redémarrage automatiques S&S (*Stop and Start).*

Il exécute un programme de gestion pour, notamment, générer des commandes de gestion matérielle de la machine 2.

Parmi ces commandes, on trouve notamment :
- une commande du mode fonctionnel de la machine MS 34,
- les signaux SCU 35, SCV 36, et SCW 37 qui permettent de commander les commutations des transistors de puissance de l'onduleur en mode démarreur,
- ainsi que la régulation du courant généré par la machine en effectuant le pilotage du circuit d'excitation.

Une pluralité de liaisons filaires 3 permet un échange de ces informations entre cette unité de contrôle 1 et la machine de 2.

On notera que préférentiellement, l'unité de contrôle 1 comprend aussi une unité de sûreté de fonctionnement (SDF) 17, qui est reliée à plusieurs capteurs (non représentés) de la pluralité de lignes filaires 13. En fonction des signaux générés par ces capteurs, l'unité 17 génère une information qui est transmise au microprocesseur 16, et de plus, l'unité 17 génère un signal ID 19 d'inhibition du démarrage (par exemple dans le cas où un capteur de boîte vitesse signale qu'une vitesse est engagée), qui permet l'inhibition du démarrage malgré une gestion logicielle défaillante (un dysfonctionnement du microprocesseur par exemple) et ce grâce au moyen 18, ici un transistor, qui permet de forcer le signal MS 34 à la masse. De plus l'information ID est communiquée au module de puissance 20 par la liaison 317 dans le but de pouvoir inhiber le mode moteur ou démarreur au plus près de la machine. En effet, dans le cas d'un court-circuit du signal MS 34 entre l'unité 1 et la machine 2, la sûreté de fonctionnement du système demeure assurée car le démarrage ne sera autorisé que si l'état logique du signal ID le permet.

On notera par ailleurs que l'unité 17 est entièrement réalisée en logique câblée, afin de ne pas être affectée par une quelconque défaillance logicielle.

L'unité de contrôle 1 comprend, en plus des éléments déjà présentés plus haut en regard du schéma de la Fig. 2,
- un bloc de gestion d'entrées 110 réalisé par exemple en logique câblée,
- un filtre suivi d'un émetteur-récepteur CAN 114, disposés entre le bus CAN inter systèmes 12 et le microprocesseur 16,
- un bloc de gestion d'entrées / sorties 115, réalisé par exemple en logique câblée,
- un circuit d'alimentation, et
- un circuit d'excitation 117.

Ces éléments sont décrits ci-après :
- Le bloc 110 reçoit :
   - les signaux de capteurs (boîte de vitesse, position de l'embrayage, pression du circuit de frein) à travers les liaisons filaires 13,
   - ainsi que le signal de commande de démarrage +DEM à travers la liaison 14.

Il délivre :
- les signaux de capteurs 111 filtrés au microprocesseur 16,
- le signal +DEM filtré 112 au microprocesseur 16,
- ainsi qu'une partie 113 des signaux de capteurs filtrés à l'unité de sûreté de fonctionnement 17.
   - L'émetteur-récepteur CAN 114 (et son filtrage d'entrée) disposé entre le bus CAN inter systèmes 12 et le microprocesseur 16 réalise l'interface physique de ce bus CAN. On note RX et TX les signaux respectivement reçus de et transmis à l'émetteur-récepteur 114 par le microprocesseur 16.
   - Le bloc de gestion des entrées / sorties 115 reçoit les signaux des capteurs de position du rotor à travers les liaisons 30, 31 et 32 ainsi que le signal THS indiquant la température du pont à travers la liaison 33. Il délivre les signaux SCU 35, SCV 36, et SCW 37 qui permettent de commander les commutations des transistors de puissance de l'onduleur en mode démarreur à partir des signaux des capteurs de position du rotor,
   - Le circuit d'alimentation 116 est capable d'alimenter l'unité 1, les drivers du module de puissance de la machine et les capteurs de position du rotor.
   - Le circuit d'excitation 117 est connecté entre les enroulements rotoriques de la machine par les liaisons +EX 311 et -EX 312. Il comprend un hacheur d'excitation et une diode de roue libre pour la magnétisation du rotor, et peut comprendre, en outre, un transistor de protection permettant la démagnétisation rapide du rotor en cas de besoin (load dump ou court-circuit du hacheur d'excitation par exemple).

La machine 2 comprend quant à elle, un module de puissance 20 qui inclue le contrôle des transistors MOS de puissance appliquant les tensions de phases (en mode démarreur) ou effectuant le redressement synchrone (en mode alternateur). Ce module 20 comprend un ensemble de circuits drivers et des transistors MOS de puissance de l'onduleur de la machine en générant les signaux de phase PHU, PHV et PHW. La machine 2 peut également inclure, une unité 21 indépendante ou intégrée dans le module de puissance 20 qui comporte des capteurs donnant la position du rotor. Dans un mode de réalisation non limitatif, lesdits capteurs sont des capteurs à effet hall et sont au nombre de trois.

La pluralité de liaisons 3 comprend des liaisons pour transmettre :
- un signal MS 34 commandant le mode de fonctionnement des circuits drivers (mode démarreur quand MS=1 et mode alternateur quand MS=0),
- un signal ID 317 permettant l'inhibition du mode moteur ou démarreur,
- des signaux de commande de commutations des interrupteurs de puissance de chacune des phases SCU 35, SCV 36 et SCW 37, respectivement pour chacune des phases de la machine (ici pour une machine triphasée), et,
- des signaux ICU 30, ICV 31, et ICW 32 issus de capteurs à effet hall donnant à l'unité de contrôle 1 la position relative du rotor de la machine.

La pluralité de liaisons 3 comprend en outre :
- un fil d'alimentation VCAP 38 permettant d'alimenter ces dits capteurs,
- un fil d'alimentation ALG 39 permettant d'alimenter les drivers, et,
- une liaison de masse 310 et une liaison THS 33 connectée à un capteur de température intégré dans le module de puissance 20.

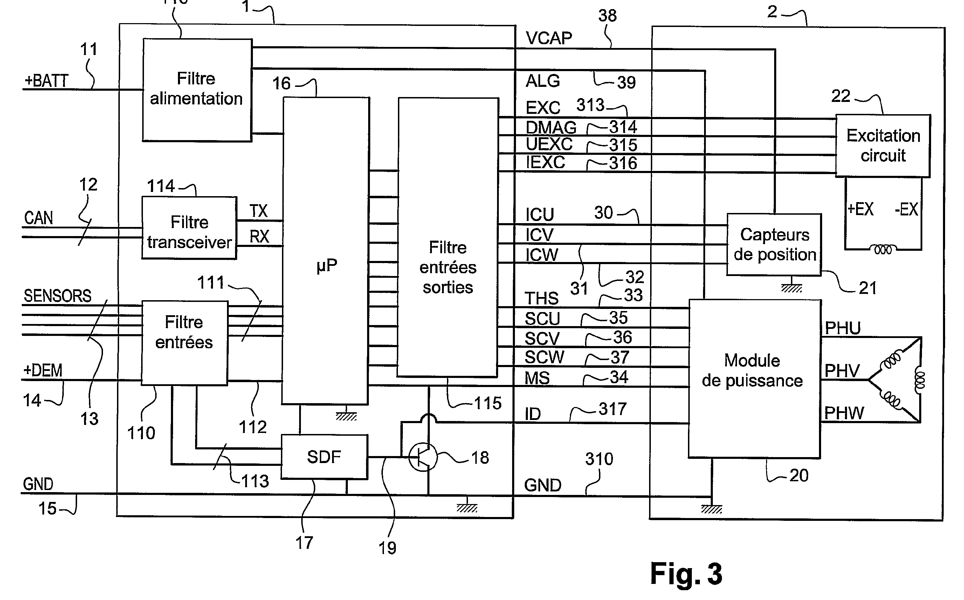

Le schéma de la Fig. 3 illustre un second mode de réalisation non limitatif de mise en oeuvre de la présente invention pour lequel le circuit d'excitation est intégré dans ou à proximité du module de puissance 20. L'unité de contrôle 1 est alors identique à l'exemple de la Fig. 2 mais sans le circuit d'excitation 117. Dans ce cas ladite unité de contrôle ne contient plus d'éléments de puissance. Cela permet d'utiliser un substrat simple et peu coûteux (type PCB par exemple) adapté à une électronique de contrôle.

Dans ce cas, parmi la pluralité de liaisons matérielles 3, on trouve en outre des liaisons permettant de transmettre :
- une commande EXC 313 du hacheur d'excitation situé dans le circuit d'excitation, commande provenant de l'unité de contrôle 1, et
- une commande DMAG 314 du transistor de protection du circuit d'excitation (permet de démagnétiser le rotor plus vite en cas de load dump, par exemple, et de protéger la machine en cas de court-circuit du transistor d'excitation).

De plus, parmi la pluralité de liaisons matérielles 3, on trouve en outre :
- deux liaisons UEXC 315 et IEXC 316 transmettant respectivement une information sur la valeur de la tension d'excitation et sur le courant d'excitation.

On notera que dans ce mode, la liaison de communication inter systèmes 12 est également un bus CAN (*Controller Area Network* - Norme ISO 11898).

## Revendications

1. Combinaison d'une machine électrique tournante polyphasée réversible (2) pour véhicule automobile, d'une unité de contrôle distante (1) et d'une pluralité de liaisons filaires (3), ladite machine comprenant un module de puissance (20) intégré dans ou à proximité immédiate de ladite machine et ledit module de puissance (20) étant couplé à ladite unité de contrôle (1) via ladite pluralité de liaisons filaires (3), **caractérisée en ce que** ladite unité de contrôle (1) réalise une gestion de haut niveau et une gestion de bas niveau de la machine,
ladite gestion de haut niveau comprenant :
- une gestion de capteurs (13) utiles à une fonction démarrage et redémarrage, et/ou
- au moins un algorithme d'arrêt/redémarrage automatiques, et/ou
- une gestion de l'état de charge et/ou un diagnostique d'une batterie, et/ou
- une gestion d'informations issues d'un bus de communication (12) inter systèmes du véhicule en vue de piloter ladite machine, et
ladite gestion de bas niveau comprenant :
- un choix du mode fonctionnel de la machine, et/ou
- au moins une fonction de sûreté de fonctionnement du véhicule, et/ou
- une régulation de la tension du réseau du véhicule ou du courant débitée par la machine, et/ou
- un diagnostique de la machine.

2. Combinaison selon la revendication 1 ou 2, **caractérisée en ce que** ledit module de puissance (20) est composé de plusieurs étages de puissance dédié chacun au pilotage d'une phase de la machine et comportant des transistors de puissance et leurs drivers associés.

3. Combinaison selon la revendication 1 ou 2, **caractérisée en ce que** ledit module de puissance (20) comprend également un étage d'excitation (22) pilotant un courant rotor de la machine (2).

4. Combinaison selon l'une quelconque des revendications 1 à 3, **caractérisée en ce que** des liaisons filaires de ladite pluralité (3) sont destinées à transmettre :
- des informations relatant la position du rotor de la machine (30-32),
- et/ou une information sur la température de la machine (33).

5. Combinaison selon l'une quelconque des revendications 1 à 4, **caractérisée en ce que** des liaisons filaires de ladite pluralité (3) sont destinées à transmettre :
- une commande permettant de sélectionner un mode de fonctionnement de la machine, et/ou
- au moins une commande relative à une gestion de la sûreté de fonctionnement du système (317), et/ou
- des ordres de commutations d'interrupteurs d'un pont de puissance (35-37) de la machine.

6. Combinaison selon l'une quelconque des revendications 1 à 5, **caractérisée en ce que** ladite pluralité de liaisons (3) comprend :
- au moins une liaison d'alimentation (38, 39),
- et/ou une liaison de masse (310).

7. Combinaison selon la revendication 6, **caractérisée en ce que** la commande relative à la gestion de la sûreté de fonctionnement du véhicule comprend une commande d'inhibition du mode moteur et/ou démarreur de la machine (317).

8. Combinaison selon l'une quelconque des revendications 1 à 6, **caractérisée en ce que** des liaisons filaires de ladite pluralité (3) sont destinées à transmettre :
- une commande de pilotage d'un transistor d'excitation,
- et/ou une commande de pilotage d'un transistor de protection,
- et/ou une information sur un courant rotorique de la machine,
et/ou une information sur une tension rotorique de la machine.

9. Combinaison selon l'une quelconque des revendications 1 à 8, **caractérisée en ce que** ladite pluralité de liaisons (3) comprend deux liaisons électriques reliant des extrémités d'un enroulement inducteur de la machine.

10. Combinaison selon l'une quelconque des revendications 1 à 8, **caractérisée en ce que** ladite unité de contrôle (1) comprend un circuit d'excitation (117) de la machine.

## Patentansprüche

1. Kombination einer reversiblen mehrphasigen rotierenden elektrischen Maschine (2) für ein Kraftfahrzeug, einer Fernsteuereinheit (1) und mehrerer Drahtverbindungen (3), wobei die Maschine ein Leistungsmodul (20) aufweist, das in oder in unmittelbarer Nähe der Maschine integriert ist, und wobei das Leistungsmodul (20) mit der Steuereinheit (1) über die mehreren Drahtverbindungen (3) verbunden ist, **dadurch gekennzeichnet, dass** die Steuereinheit (1) eine High-Level-Steuerung und eine Low-Level-Steuerung der Maschine durchführt,
wobei die High-Level-Steuerung Folgendes aufweist:
- ein Verwalten der Sensoren (13), die für eine Start- und Restart-Funktion nützlich sind, und/oder
- mindestens einen automatischen Start-/Restart-Algorithmus und/oder
- ein Verwalten des Ladezustands und/oder eine Diagnose einer Batterie und/oder
- ein Verwalten von Informationen, die von einem Inter-System-Kommunikationsbus (12) des Fahrzeugs stammen, um die Maschine zu steuern, und
wobei die Low-Level-Steuerung Folgendes aufweist:
- ein Auswählen des Betriebsmodus der Maschine und/oder
- mindestens eine Betriebssicherheitsfunktion des Fahrzeugs und/oder
- eine Regelung der Spannung des Fahrzeugnetzes oder des Stroms, die von der Maschine belastet ist, und/oder
- eine Diagnose der Maschine.

2. Kombination nach Anspruch 1 oder 2, **dadurch gekennzeichnet, dass** das Leistungsmodul (20) aus mehreren Leistungsstufen zusammengesetzt ist, die jeweils dem Steuern einer Phase der Maschine zugeordnet sind und Leistungstransistoren und ihre entsprechenden Treiber aufweisen.

3. Kombination nach Anspruch 1 oder 2, **dadurch gekennzeichnet, dass** das Leistungsmodul (20) ebenfalls eine Treiberstufe (22) aufweist, die einen Läuferstrom der Maschine (2) steuert.

4. Kombination nach einem der Ansprüche 1 bis 3, **dadurch gekennzeichnet, dass** Drahtverbindungen der mehreren Drahtverbindungen (3) dazu bestimmt sind, Folgendes zu übertragen:
- Informationen über die Position des Rotors der Maschine (30-32)
- und/oder eine Information über die Temperatur der Maschine (33).

5. Kombination nach einem der Ansprüche 1 bis 4, **dadurch gekennzeichnet, dass** Drahtverbindungen der mehreren Drahtverbindungen (3) dazu bestimmt sind, Folgendes zu übertragen:
- einen Befehl, der ermöglicht, einen Betriebsmodus der Maschine auszuwählen, und/oder
- mindestens einen Befehl in Bezug auf ein Steuern der Betriebssicherheit des Systems (317) und/oder
- Befehle zum Umschalten von Schaltern einer Leistungsbrücke (35-37) der Maschine.

6. Kombination nach einem der Ansprüche 1 bis 5, **dadurch gekennzeichnet, dass** die mehreren Verbindungen (3) Folgendes aufweisen:
- mindestens eine Stromversorgungsverbindung (38, 39),
- und/oder eine Masseverbindung (310).

7. Kombination nach Anspruch 6, **dadurch gekennzeichnet, dass** der Befehl in Bezug auf das Steuern der Betriebssicherheit des Fahrzeugs einen Inhibitionsbefehl des Motor- und/oder Starterbetriebs der Maschine (317) aufweist.

8. Kombination nach einem der Ansprüche 1 bis 6, **dadurch gekennzeichnet, dass** Drahtverbindungen der mehreren Drahtverbindungen (3) dazu bestimmt sind, Folgendes zu übertragen:
- einen Befehl zum Steuern eines Treibertransistors
- und/oder einen Befehl zum Steuern eines Schutztransistors
- und/oder eine Information über einen Läuferstrom der Maschine
- und/oder eine Information über eine Läuferspannung der Maschine.

9. Kombination nach einem der Ansprüche 1 bis 8, **dadurch gekennzeichnet, dass** die mehreren Verbindungen (3) zwei elektrische Verbindungen aufweisen, die Enden einer Feldwicklung der Maschine verbinden.

10. Kombination nach einem der Ansprüche 1 bis 8, **dadurch gekennzeichnet, dass** die Steuereinheit (1) eine Treiberschaltung (117) der Maschine aufweist.

## Claims

1. Combination of a reversible polyphaser rotary electric machine (2) for a motor vehicle, of a remote control unit (1) and of a plurality of wired connections (3), the said machine comprising a power module (20) incorporated into or in the immediate vicinity of the said machine and the said power module (20) being coupled to the said control unit (1) via the said plurality of wired connections (3), **characterized in that** the said control unit (1) performs high-level management and low-level management of the machine,
the said high-level management comprising:
- management of sensors (13) of use in a stop & start function, and/or
- at least one automatic stop & start algorithm, and/or
- management of the state of charge and/or diagnostics of a battery, and/or
- management of information derived from a vehicle inter-systems communications bus (12) with the view of operating the said machine, and
the said low-level management comprising:
- a choice of the functional mode of the machine, and/or
- at least one vehicle operational safety function, and/or
- regulation of the vehicle network voltage or of the current output by the machine and/or
- machine diagnostics.

2. Combination according to Claim 1 or 2, **characterized in that** the said power module (20) is made up of several power stages each one dedicated to operating one phase of the machine and comprising power transistors and their associated drivers.

3. Combination according to Claim 1 or 2, **characterized in that** the said power module (20) also comprises an excitation stage (22) driving a rotor current of the machine (2).

4. Combination according to any one of Claims 1 to 3, **characterized in that** wired connections of the said plurality (3) are intended to transmit:
- information relating the position of the rotor of the machine (30-32),
- and/or information regarding the temperature of the machine (33).

5. Combination according to any one of Claims 1 to 4, **characterized in that** wired connections of the said plurality (3) are intended to transmit:
- a command enabling the selection of a mode of operation of the machine, and/or
- at least one command relating to management of the operational safety of the system (317), and/or
- instructions to switch switches of a power bridge (35-37) of the machine.

6. Combination according to any one of Claims 1 to 5, **characterized in that** the said plurality of connections (3) comprises:
- at least one supply connection (38, 39),
- and/or an earthing connection (310).

7. Combination according to Claim 6, **characterized in that** the command relating to management of the operational safety of the vehicle comprises a command to inhibit the motor and/or starter mode of the machine (317).

8. Combination according to any one of Claims 1 to 6, **characterized in that** wired connections of the said plurality (3) are intended to transmit:
- a command to operate an excitation transistor,
- and/or a command to operate a protective transistor,
- and/or information regarding a rotor current of the machine,
and/or information regarding a rotor voltage of the machine.

9. Combination according to any one of Claims 1 to 8, **characterized in that** the said plurality of connections (3) comprises two electrical connections connecting ends of an inductor winding of the machine.

10. Combination according to any one of Claims 1 to 8, **characterized in that** the said control unit (1) comprises an excitation circuit (117) of the machine.
